# EUROPEAN PATENT APPLICATION

(11) **EP 2 226 401 A1**
(43) Date of publication of application: **08.09.2010**
(21) Application number: 07872857.3
(22) Date of filing: 23.11.2007
(51) Int. Cl.: C22B 11/00, C22B 3/14

(54) **METHOD FOR EXTRACTING PRECIOUS METALS FROM REFRACTORY ORES AND CONCENTRATES**

(71) Applicant: SHAPOVALOV, Viatcheslav Dmitrievich, Naro-Fominsk Moskovskaya obl. 143300 (RU); FOKIN, Konstantin Sergeevich, Moscow 121069 (RU)
(72) Inventor: SHAPOVALOV, Viatcheslav Dmitrievich, Naro-Fominsk Moskovskaya obl. 143300 (RU); FOKIN, Konstantin Sergeevich, Moscow 121069 (RU)
(74) Representative: Jeck, Anton
(86) International application number: PCT/RU2007/000655
(87) International publication number: WO 2009/067039

(57) **Abstract**

The method of extracting precious metals from resistant ores and concentrates can be used in hydrometallurgical industry in sulfide and resistant mineral raw materials processing.

Method of extracting precious metals from resistant ores and concentrates involves the application of thiosulfate and complex compounds of transition metals as catalysts-oxidants for dissolution of precious metals. Natural fulvic and humic acids are used as organic complexing compounds, thiosulfate regeneration takes place directly in the pulp, by supplying with sulphite salts and sulfur dioxide gas simultaneously with the air or oxygen supplying. Either natural or artificial sulphides, or elementary sulphur specially added in the pulp are used as a source of sulfide-ion. The process of precious metals oxidation and compounds formation with thiosulfate and other organic and inorganic ligands is carried out using the short-period radicals formed directly in the solution due to interaction of reagents used.

## Description

### Method of extraction of precious metals from resistant ores and concentrates

The declared method of extracting precious metals from resistant ores and concentrates can be used in hydrometallurgical industry in sulfide and resistant mineral raw materials processing.

Humic substances were extracted for the first time from peat in 1786 by the German scientist Franz-Karl Achard. All humic substances form as a result of post mortem (posthumous) transformation of organic remnants during humification process. All humic substances are considered high-molecular compounds. Following the development of high-molecular compounds chemistry and the emergence of new analytical techniques it is considered that molecular mass of fulvic acids is close to 10-15 thousand amu, and humic acids - from 20-30 thousand to 100-150 thousand amu. In the early 80th of the XX century it was shown that large particles of humic acids may change under the influence of detergents and chelates that destroy complex associates of molecules, thereby decreasing their average molecular mass.

There's a known method of extracting non-ferrous, rare and precious metals from mineral raw materials by treating them with a solution containing both oxidants and desoxidants at the same time. As a result of semi-ionic (donor-acceptor) interaction of the oxidants and desoxidants quick radicals are formed which effectively dissolve non-ferrous, rare and precious metals from mineral raw materials (see UK 2 414 740 A dated 07.12.2005 IPC-7: C22B 3/06).

The disadvantage of this method is the possibility of partial extraction of non-ferrous, rare and precious metals in case that the mineral raw materials contain highly active organic substance. A large amount of oxidizer is spent at the oxidation of organic substance, and if the organic substance not fully oxides it absorbs significant amounts of dissolved metals, which causes significant losses of valuable metals at the end of the process.

There's a method of extracting precious metals from sulfide-containing raw materials by dissolving precious metals with the help of ammonium thiosulfate. In doing so, water-soluble salts of copper are used as a catalyst for oxidation of precious metals, while ammonium thiosulfate is obtained by mixing ammonia, hydrogen sulfide and sulfur dioxide gas separately from the process (see US 4070182 dated 24.01.1978, IPC-2: C22B 11/04).

The disadvantages of this method enlist high waste of thiosulfate caused by its oxidation by copper salts, as well as technological complexity of obtaining ammonium thiosulfate using three gases at once. This leads to the cost increase of the process and is economically impractical.

There's a method of extracting precious metals from resistant ores by processing mineral raw materials with a mixture of ammonium thiosulfate, ammonium sulphite and ammonium hydroxide, with the addition of copper salts. The method involves reducing the losses of ammonium thiosulfate by adding to the solution ammonium sulphite which turns polythionate complexes originating from the oxidation of thiosulfate back into ammonium thiosulfate (see US 4269622 Nº dated 26.05.1981, IPC-3: C22B 11/04).

The disadvantages of this method include reduction of effectiveness of precious metals dissolution due to the influence of sodium sulphite as deoxidant.

The closest method of extracting precious metals from mineral raw materials to the declared method is the improved method of thiosulfate leaching that suggests to use complex compounds of iron and ethylenediamine tetraacetate (EDTA) as oxidants (see published application WO 2005/017215 dated 24.02.2005, IPC-7: C22B 3/06); this method passed for a prototype.

The use of complex compounds of transition metals as catalysts-oxidants for thiosulfate dissolution of precious metals is the similar feature between prototype and present invention.

The reasons hampering the technical effect listed below when using the prototype concern the fact that there is low catalytic activity of ethylenediamine tetraacetate iron complex in the known method. This significantly prolongs the time of the process, reduces amount of extracted precious metals and increases the economic costs of production.

The challenge for inventors was to develop an effective method to extract precious metals from resistant ores and concentrates which will be deprived of the above deficiencies, and will provide high economic efficiency.

Technical result is achieved due to several factors that significantly improve the process of precious metals dissolution, namely:
1. Natural fulvic and humic acids are used as organic complexing compounds for transition metals that serve as catalysts-oxidants for the precious metals dissolution.
2. Thiosulfate regeneration is carried out by supplying the pulp with sulphite salts or sulfur dioxide gas simultaneously with the air or oxygen supplying. Either natural or artificial sulphides contained in the mineral raw materials, or elementary sulphur, specially added in the pulp can be used as a source of sulfide-ion.
3. The process of precious metals oxidation and compounds formation with thiosulfate and other organic and inorganic ligands is carried out using the short-period radicals formed directly in the solution due to interaction of reagents used.

The goal is achieved due to the fact that the method of extracting precious metals from resistant ores and concentrates involves the application of thiosulfate and complex compounds of transition metals as catalysts-oxidants for dissolution of precious metals, while natural fulvic and humic acids are used as organic complexing compounds, thiosulfate regeneration takes place directly in the pulp, by supplying with sulphite salts and sulfur dioxide gas simultaneously with the air or oxygen supplying. Either natural or artificial sulphides, or elementary sulphur specially added in the pulp are used as a source of sulfide-ion. The process of precious metals oxidation and compounds formation with thiosulfate and other organic and inorganic ligands is carried out using the short-period radicals formed directly in the solution due to interaction of reagents used.

Resistant mineral raw materials usually contain organic substance of natural origin, and possibly sulphide minerals. These components make it difficult to extract silver, gold, platinum, palladium, rhodium, ruthenium, iridium and osmium by known hydrometallurgical processes, such as cyanidation, acid leaching using thiourea, leaching with organic solvents. The developed method involves the use of naturally occurring organic substance and sulfide minerals as chemical reagents, which are used in the process of precious metals extracting, which significantly reduces resistance of mineral raw materials.

The declared extraction method performance is carried out in alkaline environment created by alkaline reagents, mainly ammonium hydrate NH₄OH. The resistant ores and concentrates containing organic substance, when grinded in alcaline solution extract humic and fulvic acids into the liquid phase. These organic complexing compounds together with thiosulfate take part in the precious metals dissolution. Salts of transition metals such as copper, iron, cobalt, nickel and others are used as precious metals oxidants. Transition metals, when forming stable complexes with humic and fulvic acids, effectively oxidize precious metals, while their role in thiosulfate oxidation is insignificant. Reduction of the concentration of thiosulfate in the process is compensated by sulphite-ion and sulfide-ion interaction. Sulphite-ion may be added to the solution by dissolving sulfur dioxide gas or adding sulphite salts. Sulfide-ion is obtained by adding to the pulp elemental sulphur or through interaction of sulphite ion with natural or artificial sulfides. Sparging air or oxygen through the pulp provides formation of short-period radicals directly in the solution due to interaction of reagents used.

Progress of above processes can be described by following chemical equations:

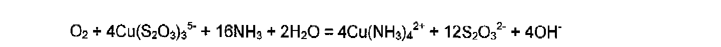

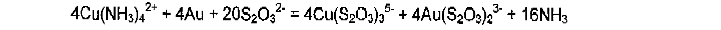

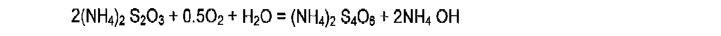

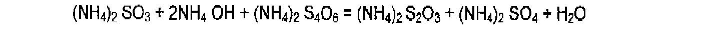

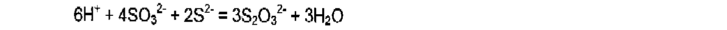

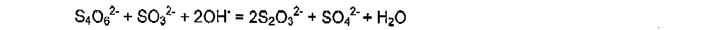

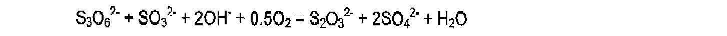

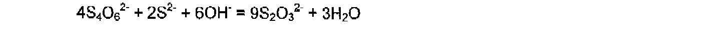

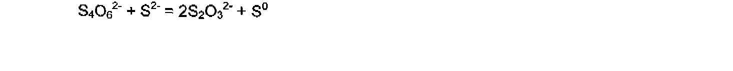

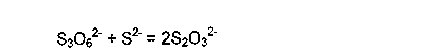

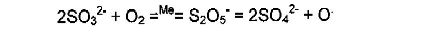

### Examples of specific performance:

1. The sample of Dictyonema shales of the following chemical composition has been exposed to the treatment: SiO₂- 50-55 %, Al₂O₃ - 10-15.3 %, Fe₂O₃ - 3,1-6,0 %, FeO - 0-3.4 %, MgO - 0,7-3,0 %, CaO - 0,5-4,7 %, Na₂O - 0,1-0,6 %, K₂O - 4,2-5,6 %, unidentifiable balance - 13,9-20,6 %, P₂O₅ - 0,4-0,7 %, S - 1.3-1,7 %, organic carbon content - 3,8 15,1 %. Sample portion weighing 1 kg was treated in proportion L:F 2:1 with addition, in the beginning of the process, of the following reagents: NH₄OH - 10 grams per litre, Na₂S₂O₃ - 30 grams per litre. Temperature of the pulp was kept at 60°C. After 15 minutes from the start of agitation the sulfur dioxide gas SO₂ and oxygen were added to the pulp in amount of 5 litres per minute. The process continued for 1 hour. The pH of the pulp at the end of the process equaled 6,7. Residual concentration of thiosulfate equaled 25,7 grams per litre. Concentration of humic and fulvic acids equaled 12 grams per litre. The analysis of the liquid phase by atomic absorption spectrophotometer showed the following concentration of non-ferrous and precious metals in the solution: Cu - 56 mg per litre, Au - 1,2 mg per litre, Pt - 2,4 mg per litre, Pd - 0,8 mg per litre, Ag - 12 mg per litre. According to assay tests the extraction equaled: for gold - 98 %, for platinum - 89 %, for palladium 87 %, for silver-99 %.
2. The sample of ore from Olimpiadinskoe deposit of the following chemical composition has been exposed to the treatment: SiO₂ - 41,8, Al₂O₃ - 6,6, CO₂ - 16,8, Fe₂O₃ - 5,88 (Feₜₒₜₐₗ), CaO - 21,4, MgO - 2,7, K₂O - 1,5, Stotai - 1,2, As - 0,28, Sb - 0,25, WO₃ - 0,02, Ag- 1,3, Au - -4,3. Sample portion weighing 1 kg was treated in proportion L:F 2:1 with addition, in the beginning of the process, of the following reagents: Na₂S₂O₃ - 30 grams per litre, peat extract of humic and fulvic acids based on NH₄OH - 15 grams per litre in terms of organic and 5 grams per litre in terms of NH₄OH. Temperature of the pulp was kept at 60 °C. After 15 minutes from the start of agitation the sulfur dioxide gas SO₂ and oxygen were added to the pulp in amount of 5 litres per minute. The process continued for 1 hour. The pH of the pulp at the end of the process equaled 6,3. Residual concentration of thiosulfate equaled 27 grams per litre. The analysis of the liquid phase by atomic absorption spectrophotometer showed the following concentration of non-ferrous and precious metals in the solution: Au - 2,1 mg per litre, An - 0,6 mg per litre, Pt- 1,3 mg per litre, Pd - 0,4 mg per litre. Concentration of iron in the solution equaled 0,7 grams per litre. According to assay tests the extraction equaled: for gold - 97,6 %, for platinum - 91,5 %, for palladium - 88 %, for silver - 92,3 %.

## Claims

1. Method of extracting precious metals from resistant ores and concentrates involving the application of thiosulfate and complex compounds of transition metals as catalysts-oxidants for dissolution of precious metals is remarkable for notable of natural fulvic and humic acids used as organic complexing compounds; thiosulfate regeneration takes place directly in the pulp, by supplying with sulphite salts and sulfur dioxide gas simultaneously with the air or oxygen supplying; either natural or artificial sulphides, or elementary sulphur specially added in the pulp are used as a source of sulfide-ion; the process of precious metals oxidation and compounds formation with thiosulfate and other organic and inorganic ligands is carried out using the short-period radicals formed directly in the solution due to interaction of reagents used.

2. Method of claim 1 is remarkable for that the process is carried out at pH from 5-8 mainly at pH=7.

3. Method of the claim 1 is remarkable for that the alkaline and alkaline-earth metals hydroxides as well as ammonium hydroxide are used to maintain pH.

4. Method of the claim 1 is remarkable for that the humic and fulvic acids are extracted from organic substance contained in the treated mineral raw materials.

5. Method of the claim 1 is remarkable for that the extract of humic and fulvic acids is added to the processing of mineral raw materials as an additional reagent.
